# EUROPÄISCHE PATENTSCHRIFT

(11) **EP 2 004 467 B1**
(45) Veröffentlichungstag und Bekanntmachung des Hinweises auf die Patenterteilung: **28.09.2016**
(21) Anmeldenummer: 07727221.9
(22) Anmeldetag: 22.03.2007
(51) Int. Cl.: B60W 20/00, B60K 6/48, B60W 10/02, B60W 10/08

(54) **HYBRIDANTRIEB MIT NOTSTARTMÖGLICHKEIT**
HYBRID DRIVE WITH AN EMERGENCY START OPTION
ENTRAINEMENT HYBRIDE AVEC POSSIBILITE DE DEMARRAGE DE SECOURS

(30) Priorität: 06.04.2006 DE 102006016138
(43) Veröffentlichungstag der Anmeldung: 24.12.2008
(73) Patentinhaber: Robert Bosch GmbH, 70442 Stuttgart (DE)
(72) Erfinder: WAGNER, Arndt, 71735 Eberdingen (DE)
(86) Internationale Anmeldenummer: PCT/EP2007/052745
(87) Internationale Veröffentlichungsnummer: WO 2007/115919

(56) Entgegenhaltungen:
- EP-A- 1 450 037
- EP-A2- 0 989 300
- WO-A-2005/005187
- DE-A1- 19 745 995
- DE-C- 517 870
- DE-C- 568 272

## Beschreibung

Aus DE 199 56 384 C1 ist ein Impulsstartverfahren und eine Impulsstartvorrichtung für eine Brennkraftmaschine bekannt. Gemäß des in DE 199 56 384 C1 offenbarten Impulsstartverfahrens wird während einer Beschleunigungsphase eine Schwungmasse drehangetrieben beschleunigt und anschließend während einer Kupplungsphase die drehende Schwungmasse mit einer drehbar gelagerten Welle, vorzugsweise der Kurbelwelle der Verbrennungskraftmaschine zur Drehmomentübertragung gekuppelt. Während der Aufziehphase und/oder der Kupplungsphase wird der Drehzahlverlauf der Schwungmasse ausgewertet und aus dieser Auswertung abgeleitet, ob ein erfolgreicher Start der Brennkraftmaschine möglich ist Falls ein erfolgreicher Start nicht zu erwarten steht, wird die Brennkraftmaschine über die Welle in eine für einen nachfolgenden zweiten Startversuch günstige Betriebsstellung gebracht. Gemäß des aus DE 199 56 384 C1 bekannten Impulsstartverfahrens wird während der Aufziehphase für die Auswertung der Gradient des Drehzahlverlaufes der Schwungmasse verwendet und bei zu geringen Gradienten die Kupplungsphase eingeleitet. Aus der WO 2005/005187 ist ein Mehrspannungsbordnetz bekannt. Eine elektrische Maschine und ein Pulswechselrichter zum Betrieb der elektrischen Maschine sind an einem ersten Teilnetz mit 42 Volt Nennspannung angeschlossen. Ein zweites Teilnetz mit 14 Volt Nennspannung ist über einen DC/DC-Wandler an dem ersten Teilnetz angeschlossen. Das zweite Teilnetz umfasst eine Batterie. Es ist vorgesehen, dass die Läuferwicklung der elektrischen Maschine aus dem zweiten Teilnetz versorgt wird. Dazu wird die Spannung der Batterie mittels des DC/DC Wandlers auf die Nennspannung des ersten Teilnetzes umgewandelt und diese dem Pulswechselrichter zugeführt. Aus der DE 568 272 ist ein Anlasser sowie ein Verfahren zum Anlassen einer Brennkraftmaschine bekannt. Es ist ein Elektromotorstromkreis vorgesehen, der eine Batterie, einen Elektromotor zum Anlassen der Brennkraftmaschine sowie ein Schaltglied umfasst. Die elektrische Maschine wird zum Anlassen der Brennkraftmaschine direkt mit der Batterie zusammengeschaltet.

Bei derzeit auf dem Markt befindlichen Fahrzeugen mit Hybridantrieb mit einem Verbrennungsmotor und mindestens einem Elektroantrieb, besteht für den Fahrer keine Möglichkeit, bei entladener Hochspannungsbatterie das Fahrzeug zu starten. Dies stellt einen höchst unbefriedigenden Zustand dar.

### Offenbarung der Erfindung

Der vorliegenden Erfindung liegt die Aufgabe zugrunde, eine kostengünstige Möglichkeit zu schaffen, um ein mit einem Hybridantrieb ausgestattetes Fahrzeug entweder über die das Bordnetz speisende Fahrzeugbatterie oder fremd zu starten.

Erfindungsgemäß wird vorgeschlagen, die Bordnetz-Batterie des Kraftfahrzeuges, bei der es sich im allgemeinen um eine 12-Volt Batterie handelt, auf den Eingang eines Pulswechselrichters, der dem mindestens einen elektrischen Antrieb des Hybridantriebs zugeordnet ist, zu schalten und diese mit einer gegenüber dem Normalbetrieb reduzierten Spannung anzusteuern. Der mindestens eine Elektroantrieb des Hybridantriebes des Kraftfahrzeuges verfügt über zwei Kupplungen, eine Kupplung zum Verbrennungsmotor und eine zum Getriebe des Kraftfahrzeuges. Bei der Ansteuerung des mindestens einen Elektroantriebes mit reduzierter Spannung stehen diese beiden Kupplungen offen, so dass der mindestens eine Elektroantrieb ohne Last bis zu der maximal entsprechend dem Ladungsniveau der Fahrzeugbatterie erreichbaren Drehzahl beschleunigt wird. Ein Relais oder ein anderer elektrischer Kontakt, mit dem anstelle der entladenen Hochspannungsbatterie nunmehr die 12-Volt Bordnetz-Batterie auf den Pulswechselrichtereingang geschaltet ist, wird wieder in seinen Ruhezustand geschaltet und anschließend eine Impulskupplung zwischen dem beschleunigten mindestens einen Elektroantrieb von der Verbrennungskraftmaschine geschlossen. Die im rotierenden Rotor des mindestens einen Elektroantriebes gespeicherte mechanische Energie wird über die Impulskupplung auf den Verbrennungsmotor, vorzugsweise dessen Kurbelwelle übertragen, so dass dieser gestartet werden kann. Sollte der Startversuch missglücken, so kann der gesamte Vorgang wiederholt werden, vorausgesetzt die 12-Volt Bordnetz-Batterie des Kraftfahrzeuges weist einen ausreichenden Ladezustand auf.

Der erfindungsgemäß vorgeschlagene Aufbau des Hybridantriebes ist bevorzugt so gestaltet, dass die 12-Volt Fahrzeugbatterie und die Hochspannungsbatterie allseitig gegeneinander isoliert sind und keine unzulässig hohen Spannungsspitzen von dem mindestens einen elektrischen Antrieb über den Pulswechselrichter in die intakte 12-Volt Bordnetz-Batterie eingespeist werden. Das Relais oder der elektrische Kontaktschalter in einer anderen Ausführungsform, mit welchem die 12-Volt Batterie bei entladener Hochspannungsbatterie auf den Eingangspulswechselrichter geschaltet wird, ist dazu mit einer Steuermimik derart abgesichert, dass das Relais nur dann geschaltet werden kann, wenn die Impulskupplung zur Verbrennungskraftmaschine offen steht. Die das Relais absichernde Steuermimik zeichnet sich dadurch aus, dass diese in Abhängigkeit vom Zustand des Pulswechselrichters einen Schaltvorgang des Relais freigibt oder unterbindet. Die Steuermimik kann dazu entsprechend des Wunsches des Fahrers zum Beispiel über einen Handschalter im Fahrgastraum oder über einen solchen im Motorraum freigegeben werden. Die das Relais sichernde Steuermimik kann separat als Schalteranordnung ausgeführt sein oder auch als Steuereinheit dem Pulswechselrichter direkt zugeordnet werden oder auch in einem beliebigem Steuergerät realisiert sein.

Durch die erfindungsgemäß vorgeschlagene Lösung besteht auch die Möglichkeit, die Verbrennungskraftmaschine eines mit einem Hybridantrieb ausgestatteten Fahrzeuges Fremdzustarten. Bei entladener Hochspannungsbatterie im Traktionsnetz des Hybridantriebes, wird die im Bordnetz des Fahrzeugs mit Hybridantrieb vorgesehene Bordnetz-Batterie mit den Eingängen des dem mindestens einen Elektroantrieb zugeordneten Pulswechselrichters verbunden. Nun kann bei unzureichendem Ladungsniveau der Bordnetz-Batterie diese mittels eines Starthilfekabels mit einer Spenderbatterie oder einem Spenderfahrzeug verbunden werden und der mindestens eine Elektroantrieb des Fahrzeugs mit Hybridantrieb über das Spenderfahrzeug bzw. die Spenderbatterie auf eine maximal erreichbare Drehzahl beschleunigt werden. Danach wird das Bordnetz samt Bordnetz-Batterie und dem angeschlossenen Spenderfahrzeug allseitig von dem Pulswechselrichter getrennt. Ist die maximale Drehzahl erreicht, wird die schnell schaltende Impulskupplung zwischen der Verbrennungskraftmaschine und dem beschleunigten mindestens einen Elektroantrieb des Hybridantriebes verbunden. Durch die Rotationsenergie des Rotors des mindestens eines Elektroantriebes wird die Verbrennungskraftmaschine durchgedreht und schließlich gestartet. Sollte der erste Startversuch misslingen, kann der Vorgang öfters wiederholt werden.

### Zeichnung

Anhand der Zeichnung wird die Erfindung nachstehend eingehender beschrieben.

Es zeigt:
- Figur 1: Ein Traktionsnetz und ein Bordnetz eines Fahrzeugs mit Hybridantrieb und
- Figur 2: den erfindungsgemäß vorgeschlagenen Hybridantrieb, bei dem einen Pulswechselrichter über den der mindestens eine Elektroantrieb des Hybridantriebes angesteuert wird, ein Relais zugeordnet ist.

### Ausführungsvarianten

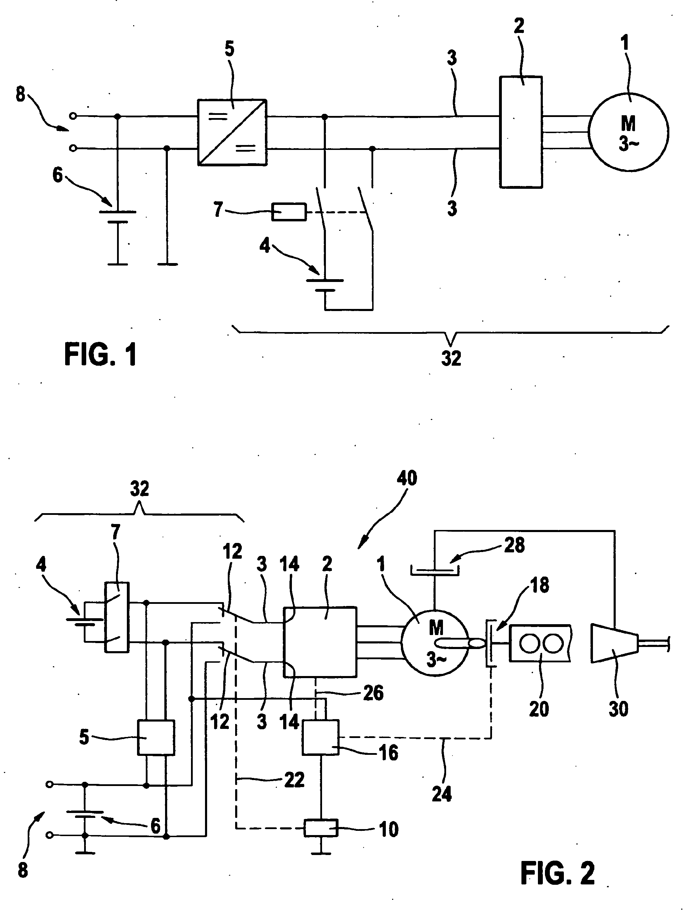

Figur 1 ist ein Traktionsnetz und ein Bordnetz eines Hybridantriebes zu entnehmen.

Ein Hybridantrieb umfasst mindest einen Elektroantrieb 1, dem ein Pulswechselrichter 2 zur Ansteuerung des mindestens einen Elektroantriebs 1 zugeordnet ist. Der Pulswechselrichter 2 wird über Versorgungsleitungen 3 mit dem DC/DC-Wandler 5 verbunden. Der DC/DC-Wandler 5 ist unidirektional ausgelegt. Über eine Hochspannungsbatterie 4, die auch als Traktionsbatterie bezeichnet wird, wird im normalen Betrieb bei geschlossenem Hauptschütz 7 über den Pulswechselrichter 2 der mindestens eine elektrische Antrieb 1 angesteuert. Gleichzeitig kann aus dem mit Bezugszeichen 32 bezeichneten Traktionsnetz des Hyb-ridantriebes ein Bordnetz 8, welches eines Bordnetz-Batterie 6 enthält, mit Spannung versorgt werden. Gemäß der in Figur 1 dargestellten Schaltung des Pulswechselrichters 2 ist dieser stets mit der Hochspannungsbatterie 4 (Traktionsbatterie) verbunden. Über den unidirektional arbeitenden DC/DC-Wandler 5 wird aus dem Traktionsnetz 32 entsprechend des Betriebszustandes des mindestens einen Elektroantriebes 1, das Bordnetz 8 des Fahrzeugs mit Spannung versorgt und gegebenenfalls die im Bordnetz 8 enthaltene Bordnetz-Batterie 6 geladen. Mit dem dargestellten unidirektionalen DC/DC-Wandler 5 lässt sich Energie vom Traktionsnetz 32 in das Bordnetz 8, bei dem es sich um ein 12-Volt oder auch um ein 42-Vol Netz handeln kann, transportiert. Der DC/DC-Wandler 5 ersetzt in einem mit einem Hybridantrieb ausgestatteten Kraftfahrzeug den Generator (Lichtmaschine), die einem konvenlionellen.Fahrzeug eingesetzt wird. Die Energie für die Verbraucher im Bordnetz 8 des Kraftfahrzeuges wird über den mindestens einen Elektroantrieb 1 über Zwischenschaltung des Pulswechselrichters 2 zur Verfügung gestellt. Durch die erfindungsgemäß vorgeschlagene Anordnung innerhalb eines Hybridantriebes ist ein Energiefluss vom Bordnetz 8 zum Traktionsnetz 32 überflüssig. Ferner kann durch die erfindungsgemäß vorgeschlagene Lösung der Einsatz eines bidirektional ausgelegten DC/DC-Wandlers vermieden werden, der im Vergleich zu einem unidirektional arbeitenden DC/DC-Wandler 5 erheblich teurer ist. Über die erfindungsgemäß vorgeschlagene Lösung kann ohne den Einsatz eines bidirektional ausgelegten DC/DC-Wandlers die Möglichkeit eines Starts einer Verbrennungskraftmaschine aus der Bordnetz-Batterie 6 ermöglicht werden oder über einen Fremdstart mit einem Spenderfahrzeug vorgenommen werden.

Der Darstellung gemäß Figur 2 ist ein Hybridantrieb zu entnehmen, bei welchem der Pulswechselrichter eingangsseitig sowohl mit einer Hochspannungsbatterie als auch mit der im Bordnetz des Fahrzeugs enthaltenen Bordnetz-Batterie verbindbar ist.

Figur 2 zeigt einen Parallelhybridantrieb 40, der eine Verbrennungskraftmaschine 20 sowie mindestens einen elektrischen Antrieb 1 umfasst. Der elektrische Antrieb 1 wird analog zur Darstellung des Hybridantriebs gemäß Figur 1 über den Pulswechselrichter 2 angesteuert. An Eingängen 14 des Pulswechselrichters 2 enden Versorgungsleitungen 3, an denen jeweils zum Beispiel Relaiskontakte 12 ausgebildet sind. Die Relaiskontakte 12 der Versorgungsleitungen 3 des Pulswechselrichters 2 werden über ein Relais 10 geschaltet, dem eine Steuermimik 16 zugeordnet ist. Die Relaiskontakte 12 werden über eine in Figur 2 gestrichelt angedeutete mechanische Kopplung über das überwachte Relais 10 betätigt. Im Hybridantrieb 40 gemäß der Darstellung in Figur 2, befindet sich die Hochspannungsbatterie 4 (Traktionsbatterie), der ein Hauptschütz 7 vorgeschaltet ist. Im Bordnetz 8 des Fahrzeugs ist die Bordnetz-Batterie 6 enthalten, bei der es sich um eine konventionelle 12-Volt Batterie handeln kann. Zwischen der zum Traktionsnetz 32 gehörenden Hochspannungsbatterie 4 (Traktionsbatterie) und dem Bordnetz 8 des Fahrzeugs, ist eine DC/DC-Wandler 5 geschaltet, bei dem es sich um einen unidirektionalen Wandler handelt, über welchen das Bordnetz 8 und die in diesem enthaltene Bordnetz-Batterie 6 entsprechend des Betriebsmodus des mindestes einen elektrischen Antriebes 1 gespeist wird. Bei dem in Figur 2 dargestellten DC/DC-Wandler 5 handelt es sich bevorzugt um einen unidirektional arbeitenden Wandler, der nur Energie vom Traktionsnetz 32 in das Bordnetz 8 einspeist. Über die in Figur 2 dargestellte Schaltung ist die Energieflussrichtung vom Bordnetz 8 in das Traktionsnetz 32 obsolet.

Der mindestens eine Elektroantrieb 1 ist über eine schnell schaltende, bevorzugt als Impulskupplung ausgebildete Kupplung 18 mit der Kurbelwelle der Verbrennungskraftmaschine 20 kuppelbar. Ferner steht der mindest eine Elektroantrieb 1 über eine weitere Kupplung 28 mit einem hier nur schematisch angedeuteten Fahrzeuggetriebe 30 in Verbindung.

Die dem Relais 10 zugeordnete Steuermimik 16 ist einerseits über eine Signalleitung 26 mit dem Pulswechselrichter 2 verbunden, mit dem der Zustand des dem mindestens einen Elektroantrieb 1 zugeordnete Pulswechselrichter 2 überwacht wird. Ferner verläuft von der Steuermimik 16 eine Signalleitung 24 zur schnellschalteten Kupplung 18. Über die Signalleitung 24 wird die Position der Kupplung 18 zwischen der mindestens einen Elektroantrieb 1 und der Verbrennungskraftmaschine 20 auf die Zustände geschlossen oder geöffnet überwacht.

Der erfindungsgemäß vorgeschlagene Hybridantrieb 40, bei dem es sich beim beschriebenen Ausführungsbeispiel um einen Parallelhybridantrieb handelt, erlaubt einen Start der Verbrennungskraftmaschine 20 bei entladener Hochspannungsbatterie 4 (Traktionsbatterie). Für diesen Fall werden die elektrischen Verbindungen zwischen den Relaiskontakten 12 und der von der Hochspannungsbatterie 4 (Traktionsbatterie) getrennt und mit den Leitungen, die zum Bordnetz 8 mit dort enthaltener Bordnetz-Batterie 6 verlaufen, verbunden. Die Eingänge 14 des dem mindestens einen Elektroantrieb 1 zugeordneten Pulswechselrichters 2, sind über die Versorgungsleitungen 3 nunmehr mit der Bordnetz-Batterie 6 des Bordnetzes 8 verbunden. Da dem Bordnetz 8 entsprechend des Ladezustandes der Bordnetz-Batterie 6 nur eine geringere Spannung entzogen werden kann, wird der mindestens eine Elektroantrieb I bei geöffneter Kupplung 18 zwischen dem mindestens einen Elektroantrieb I und der zu startenden Verbrennungskraftmaschine 20 auf die mit dem verfügbaren Spannungsniveau erreichbare maximale Drehzahl beschleunigt. In diesem Falle steht auch die weitere Kupplung 28 zum Fahrzeuggetriebe 30 offen, so dass der mindestens eine Elektroantrieb 1 lastfrei beschleunigt werden kann.

Die elektrische Verbindung der Eingänge 14 des Pulswechselrichters 2 mit den zum Bordnetz 8 verlaufenden elektrischen Leitungen, ist nur dann über das Relais 10 mit den Relaiskontakten 12 möglich, wenn über die Signalleitung 24 festgestellt wird, dass die Kupplung 18 zwischen dem mindestens einen Elektroantrieb 1 und in der zu startenden Verbrennungskraftmaschine 20 offen steht. Ferner wird durch die Steuermimik 16 der Zustand des den mindestens einen Elektroantrieb 1 ansteuernden Pulswechselrichter 2 abgefragt, um zu vermeiden, das unzulässig hohe Spannungsspitzen in das Bordnetz 8 des Fahrzeugs gelangen und die dort enthaltene Bordnetz-Batterie 6 schädigen.

Hat der mindestens eine Elektroantrieb 1 seine maximal erreichbare Drehzahl erreicht, werden über das Relais 10 die Relaiskontakte 12 vom Bordnetz 8 getrennt und die schnellschaltende Kupplung 18 zwischen dem beschleunigtem Elektroantrieb 1 und der zu startenden Verbrennungskraftmaschine 20 geschlossen. Die im Rotor des mindestens einen Elektroantriebs 1 gespeicherte Rotationsenergie wird nun auf die Kurbelwelle der Verbrennungskraftmaschine 20 übertragen und diese kann gestartet werden. Entsprechend des Ladungszustandes der Bordnetz-Batterie 6 des Bordnetzes 8 des Fahrzeuges kann der Startvorgang öfters wiederholt werden.

Ist auch die Bordnetz-Batterie 6 im Bordnetz 8 des Fahrzeugs soweit entladen, dass ein Start der Verbrennungskraftmaschine 20 nicht möglich ist, kann diese über ein Starthilfekabel mit einer Spenderbatterie oder einem Spenderfahrzeug verbunden werden, so dass der mindestens eine elektrische Antrieb 1 über den Pulswechselrichter 2 die Versorgungsleitungen 3 und die mit dem Starthilfekabel mit einem mit einer Spenderbatterie oder einem Spenderfahrzeug verbundene Bordnetz-Batterie 6 gestartet werden kann. Für diesen Fall bleiben die Versorgungsleitungen 3 von den Leitungen der Hochspannungsbatterie 4 (Traktionsbatterie) getrennt.

Bei dem in Figur 2 dargestellten Hybridantrieb 40, bei dem es sich um einen Parallelhybridantrieb handelt, sind die Bordnetz-Batterie 6 des Bordnetzes 8 und die Hochspannungsbatterie 4 (Traktionsbatterie) vollständig gegeneinander isoliert. Durch die Steuermimik 16 wird sichergestellt, dass keine unzulässig hohen Spannungen in die Bordrietz-Batterie 6 durch den mindestens einen Elektroantrieb 1 induziert werden. Schaltbedingungen des Relais 10, welches auf die Relaiskontakte 12 einwirkt, sind in der Steuermimik 16 hinterlegt. Diese stellt sicher, dass das Relais 10 nur dann zum Schalten freigeben wird, wenn dies der Zustand des Pulswechselrichters 2 erlaubt. Zustände, in denen der Pulswechselrichter 2 ein Schalten des Relais 10 verhindert, sind zum einen eine zu hohe Spannung an den Eingangsklemmen 14 des Pulswechselrichters 2, was aufgrund eines noch geladenen Kondensators innerhalb des Pulswechselrichters 2 auftreten kann, ferner ein Fehlerzustand im Pulswechselrichter 2. Über die Steuermimik 16 kann ein Schalten des Relais 10 dann freigegeben werden, wenn dies einem Fahrerwunsch, übermittelt zum Beispiel durch Betätigung eines Handschalters im Fahrgastraum oder Motorraum gewünscht wird. Die Steuermimik 16 kann einerseits separat durch Schalter implementiert sein, die Steuermimik 16 kann andererseits auch unmittelbar in dem Pulswechselrichter 2 integriert werden. Ferner ist es möglich, die Steuermimik 16 auch durch ein eigenes Steuergerät zu realisieren. Der in Figur 2 dargestellte Hybridantrieb 40 umfasst eine Verbrennungskraftmaschine 20 sowie einen Elektroantrieb 1. Anstelle des in Figur 2 dargestellten einen Elektroantriebes 1, dem der Pulswechselrichter 2 zugeordnet ist, kann der Hybridantrieb 40 auch mehrere Elektroantriebe umfassen, denen dann jeweils ein separater Pulswechselrichter zugeordnet ist. Im Falle eines Hybridantriebes 40 mit mehreren Elektroantrieben, können deren Pulswechselrichter 2 auch in ein separates Steuergerät integriert sein.

## Patentansprüche

1. Verfahren zum Starten einer Verbrennungskraftmaschine (20) eines Fahrzeugs mit Hybridantrieb (40), der mindestens einen Elektroantrieb (1) aufweist, dem eine Hochspannungsbatterie (4) zugeordnet und das Fahrzeug ein Bordnetz (8) mit Bordnetz-Batterie (6) aufweist, mit nachfolgenden Verfahrensschritten:
a. bei entladener Hochspannungsbatterie (4) wird die Bordnetz-Batterie (6) mittels eines Relais (10) auf einen den mindestens einen Elektroantrieb (1) ansteuernden Pulswechselrichter (2) geschaltet,
b. der mindestens eine Elektroantrieb (1) wird lastfrei auf eine mit der anliegenden Spannung maximal erreichbare Drehzahl beschleunigt,#
c. der Pulswechselrichter (2) wird von der Bordnetz-Batterie (6) getrennt und eine Kupplung (18) zwischen dem mindestens einen Elektroantrieb. (1) und der Verbrennungskraftmaschine (20) wird geschlossen.

2. Verfahren gemäß Anspruch 1, **dadurch gekennzeichnet, dass** die Bordnetz-Batterie (6) oder die Hochspannungsbatterie (4) über ein Relais (10) auf Eingänge (14) des Pulswechselrichters (2) geschaltet werden.

3. Verfahren gemäß Anspruch 2, **dadurch gekennzeichnet, dass** das Relais (10) mit einer Steuermimik (16) überwacht wird, die den Zustand des Pulswechselrichters (2) und den Zustand der Kupplung (18) überwacht.

4. Verfahren gemäß Anspruch 1, **dadurch gekennzeichnet, dass** Verfahrensschritt a) nur bei geöffneter Kupplung (18) durchgeführt wird.

5. Verfahren gemäß Anspruch 1, **dadurch gekennzeichnet, dass** nach erfolgtem Start der Verbrennungskraftmaschine (20) die Hochspannungsbatterie (4) durch den mindestens einen Elektroantrieb (1) und den Pulswechselrichter (2) geladen wird.

6. Verfahren gemäß Anspruch 2, **dadurch gekennzeichnet, dass** das Schalten des Relais (10) durch einen Fahrerwunsch ausgelöst wird.

7. Verfahren gemäß Anspruch 1, **dadurch gekennzeichnet, dass** gemäß Verfahrensschritt a) die Verbrennungskraftmaschine (20) über ein an der Bordnetz-Batterie (6) angeschlossenes Starthilfekabel, welches mit einer Spenderbatterie oder einem Spenderfahrzeug verbunden ist, gestartet wird.

8. Hybridantrieb (40) für ein Fahrzeug mit einer Verbrennungskraftmaschine (20) und mindestens einem Elektroantrieb (1), dem ein Pulswechselrichter (2) zugeordnet ist, mit einer Bordnetz-Batterie (6) und einer Hochspannungsbatterie (4) und mindestens einer Kupplung (18) zwischen der Verbrennungskraftmaschine (20) und mindestens einen Elektroantrieb (1), **dadurch gekennzeichnet, dass** ein Relais (10) Eingänge (14) des mindestens einen Pulswechselrichters (2) für den mindestens einen Elektroantrieb (1) entweder mit der Hochspannungsbatterie (4) oder der Bordnetz-Batterie (6) elektrisch verbindet.

9. Hybridantrieb (40) gemäß Anspruch 8, **dadurch gekennzeichnet, dass** dem Relais (10) eine Steuermimik (16) zugeordnet ist, die den Zustand des Pulswechselrichters (2) und den Zustand der mindestens einen Kupplung (18) überwacht.

10. Hybridantrieb (40) gemäß Anspruch 8, **dadurch gekennzeichnet, dass** das Relais (10) über einen im Fahrgastraum oder im Motorraum des Fahrzeugs angeordneten Taster betätigbar ist.

11. Hybridantrieb (40) gemäß Anspruch 8, **dadurch gekennzeichnet, dass** die mindestens eine Kupplung (18) als schnellschaltende Impulskupplung ausgeführt ist.

## Claims

1. Method for starting an internal combustion engine (20) of a vehicle comprising a hybrid drive (40) which has at least one electric drive (1) which has an associated high-voltage battery (4), and the vehicle has an on-board electrical system (8) comprising an on-board electrical system battery (6), the said method comprising the following method steps:
a. when the high-voltage battery (4) is discharged, the on-board electrical system battery (6) is connected by means of a relay (10) to a pulse-controlled inverter (2) which drives the at least one electric drive (1),
b. the at least one electric drive (1) is accelerated under zero load to a maximum achievable rotation speed at the applied voltage,
c. the pulse-controlled inverter (2) is disconnected from the on-board electrical system battery (6) and a clutch (18) between the at least one electric drive (1) and the internal combustion engine (20) is closed.

2. Method according to Claim 1, **characterized in that** the on-board electrical system battery (6) or the high-voltage battery (4) is connected by means of a relay (10) to inputs (14) of the pulse-controlled inverter (2).

3. Method according to Claim 2, **characterized in that** the relay (10) is monitored using a control mechanism (16) which monitors the state of the pulse-controlled inverter (2) and the state of the clutch (18).

4. Method according to Claim 1, **characterized in that** method step a) is carried out only when the clutch (18) is open.

5. Method according to Claim 1, **characterized in that**, after the internal combustion engine (20) is started, the high-voltage battery (4) is charged by the at least one electric drive (1) and the pulse-controlled inverter (2).

6. Method according to Claim 2, **characterized in that** the switching of the relay (10) is triggered by a driver request.

7. Method according to Claim 1, **characterized in that**, according to method step a), the internal combustion engine (20) is started by means of a jump lead which is connected to the on-board electrical system battery (6) and which is connected to a donor battery or a donor vehicle.

8. Hybrid drive (40) for a vehicle comprising an internal combustion engine (20) and at least one electric drive (1) which has an associated pulse-controlled inverter (2), comprising an on-board electrical system battery (6) and a high-voltage battery (4) and at least one clutch (18) between the internal combustion engine (20) and at least one electric drive (1), **characterized in that** a relay (10) electrically connects inputs (14) of the at least one pulse-controlled inverter (2) for the at least one electric drive (1) either to the high-voltage battery (4) or the on-board electrical system battery (6).

9. Hybrid drive (40) according to Claim 8, **characterized in that** the relay (10) has an associated control mechanism (16) which monitors the state of the pulse-controlled inverter (2) and the state of the at least one clutch (18).

10. Hybrid drive (40) according to Claim 8, **characterized in that** the relay (10) can be operated by means of a pushbutton which is arranged in the passenger compartment or in the engine compartment of the vehicle.

11. Hybrid drive (40) according to Claim 8, **characterized in that** the at least one clutch (18) is designed as a rapidly switching pulse-controlled clutch.

## Revendications

1. Procédé de démarrage d'un moteur à combustion interne (20) d'un véhicule à groupe propulseur hybride (40), lequel possède au moins un groupe propulseur électrique (1) auquel est associée une batterie à haute tension (4) et le véhicule possède un réseau de bord (8) avec une batterie de réseau de bord (6), le procédé comprenant les étapes suivantes :
a. lorsque la batterie à haute tension (4) est déchargée, la batterie de réseau de bord (6) est commutée au moyen d'un relais (10) sur un onduleur à impulsions (2) qui commande l'au moins un groupe propulseur électrique (1),
b. l'au moins un groupe propulseur électrique (1) est accéléré sans charge à une vitesse de rotation maximale pouvant être atteinte avec la tension appliquée,
c. l'onduleur à impulsions (2) est déconnecté de la batterie de réseau de bord (6) et un accouplement (18) entre l'au moins un groupe propulseur électrique (1) et le moteur à combustion interne (20) est fermé.

2. Procédé selon la revendication 1, **caractérisé en ce que** la batterie de réseau de bord (6) ou la batterie à haute tension (4) sont commutées par le biais d'un relais (10) sur les entrées (14) de l'onduleur à impulsions (2).

3. Procédé selon la revendication 2, **caractérisé en ce que** le relais (10) est surveillé avec une mimique de commande (16) qui surveille l'état de l'onduleur à impulsions (2) et l'état de l'accouplement (18).

4. Procédé selon la revendication 1, **caractérisé en ce que** l'étape a) de procédé n'est exécutée que lorsque l'accouplement (18) est ouvert.

5. Procédé selon la revendication 1, **caractérisé en ce qu'**après un démarrage réussi du moteur à combustion interne (20), la batterie à haute tension (4) est chargée par l'au moins un groupe propulseur électrique (1) et l'onduleur à impulsions (2).

6. Procédé selon la revendication 2, **caractérisé en ce que** la commutation du relais (10) est déclenchée par un souhait du conducteur.

7. Procédé selon la revendication 1, **caractérisé en ce que** conformément à l'étape a) de procédé, le moteur à combustion interne (20) est démarré par le biais d'un câble d'aide au démarrage raccordé à la batterie de réseau de bord (6), lequel est relié à une batterie donatrice ou un véhicule donateur.

8. Groupe propulseur hybride (40) pour un véhicule comprenant un moteur à combustion interne (20) et au moins un groupe propulseur électrique (1) auquel est associé un onduleur à impulsions (2), comprenant une batterie de réseau de bord (6) et une batterie à haute tension (4) et au moins un accouplement (18) entre le moteur à combustion interne (20) et au moins un groupe propulseur électrique (1), **caractérisé en ce qu'**un relais (10) relie électriquement les entrées (14) de l'au moins un onduleur à impulsions (2) pour l'au moins un groupe propulseur électrique (1) soit à la batterie à haute tension (4), soit à la batterie de réseau de bord (6).

9. Groupe propulseur hybride (40) selon la revendication 8, **caractérisé en ce qu'**une mimique de commande (16) est associée au relais (10), laquelle surveille l'état de l'onduleur à impulsions (2) et l'état de l'au moins un accouplement (18).

10. Groupe propulseur hybride (40) selon la revendication 8, **caractérisé en ce que** le relais (10) peut être actionné par le biais d'une touche disposée dans l'habitacle ou dans le compartiment moteur du véhicule.

11. Groupe propulseur hybride (40) selon la revendication 8, **caractérisé en ce que** l'au moins un accouplement (18) est réalisé sous la forme d'un accouplement à impulsion à commutation rapide.
